# EUROPÄISCHE PATENTSCHRIFT

(11) **EP 3 229 341 B1**
(45) Veröffentlichungstag und Bekanntmachung des Hinweises auf die Patenterteilung: **08.01.2020**
(21) Anmeldenummer: 17165286.0
(22) Anmeldetag: 06.04.2017
(51) Int. Cl.: H02J 9/00

(54) **BETRIEBSGERÄT MIT NOTSTROMVERSORGUNGSMITTELN**
OPERATING DEVICE WITH EMERGENCY POWER SUPPLY MEANS
ORGANE DE COMMANDE COMPRENANT DES DISPOSITIFS D'ALIMENTATION ÉLECTRIQUE DE SECOURS

(30) Priorität: 07.04.2016 DE 202016101832 U
(43) Veröffentlichungstag der Anmeldung: 11.10.2017
(73) Patentinhaber: Tridonic GmbH & Co. KG, 6851 Dornbirn (AT)
(72) Erfinder: Kears, John, Witton Gilbert, Durham (GB); Wilson, Ian, Sunderland SR33RH (GB)
(74) Vertreter: Thun, Clemens

(56) Entgegenhaltungen:
- WO-A1-02/16826
- WO-A2-2013/136242
- US-A- 5 713 655
- US-A1- 2013 147 351
- LEUCHTER JAN ET AL: "Capacity of power-batteries versus temperature", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1-8, XP032800253, DOI: 10.1109/EPE.2015.7309298 [retrieved on 2015-10-27]

## Beschreibung

Die vorliegende Erfindung betrifft ein Betriebsgerät, welches zum Betreiben von Leuchtmitteln, beispielsweise zum Betreiben von LEDs vorgesehen ist und neben Anschlüssen für eine externe Versorgungsspannung zusätzlich auch interne Notstromversorgungsmittel zum Bereitstellen einer Notstromversorgung aufweist. Insbesondere betrifft die Erfindung ein Betriebsgerät, welches außerhalb einer zu betreibenden Leuchte anzuordnen ist, wobei es sich bei der Leuchte dann insbesondere um eine sog. Deckeneinbauleuchte handeln kann.

Betriebsgeräte zum Betreiben von Leuchtmitteln sind in unterschiedlichster Form bekannt und werden je nach Anwendungsfall auch in unterschiedlicher Weise positioniert. Bei großräumigen Leuchten werden die Betriebsgeräte beispielsweise in der Regel innerhalb eines Leuchtengehäuses oder zumindest an der Außenseite eines Trägerelements der Leuchte positioniert. Die Betriebsgeräte sind in diesem Fall fest an dem Gehäuse beziehungsweise dem Trägerelement der Leuchte angeordnet und dann in entsprechender Weise elektrisch mit den Leuchtmitteln verbunden. Eine derartige Positionierung bietet sich wie bereits erwähnt dann an, wenn das Leuchtengehäuse verhältnismäßig großvolumig ist beziehungsweise das Trägerelement ausreichend Platz zur Positionierung des Betriebsgerätes bietet.

Daneben sind allerdings auch Anwendungsfälle bekannt, bei denen auf Grund der Platzverhältnisse das Betriebsgerät nicht unmittelbar in oder an der Leuchte selbst angeordnet werden kann sondern stattdessen ausgelagert werden muss. Bekannt ist in diesem Zusammenhang beispielsweise eine von der Anmelderin unter der Bezeichnung "PANOS" vertriebene Deckeneinbauleuchte, welche in der Einbauöffnung einer abgehängten Decke zu positionieren ist. Da die Leuchte und die zugehörige Einbauöffnung verhältnismäßig klein sind und darüber hinaus auch der Zwischenraum zwischen abgehängter Decke und Rohdecke nur eine geringe Höhe aufweist, ist in diesem Fall vorgesehen, das Betriebsgerät, welches die externe allgemeine Versorgungsspannung in eine zum Betrieb der Leuchtmittel geeignete Betriebsspannung umsetzt, auszulagern und als separate Einheit in dem Deckenzwischenraum zu positionieren. Die Verbindung zu der eigentlichen Leuchte mit den Leuchtmitteln erfolgt dann über eine flexible lösbare Kabelverbindung. Zur Montage wird in diesem Fall zunächst das Betriebsgerät in dem Deckenzwischenraum angeordnet und mit der Leuchte verbunden. Erst im abschließenden Montageschritt wird dann die Leuchte in die Einbauöffnung eingesetzt.

Die vorliegende Erfindung betrifft nunmehr Betriebsgeräte, welche neben einem Normalbetrieb der zugehörigen Leuchte bzw. Leuchtmittel auch einen Notbetrieb ermöglichen sollen. Das heißt, im Falle eines Notzustands oder eines Ausfalls der allgemeinen Versorgungsspannung sollen die Leuchtmittel trotz allem mit einer gewissen Grundhelligkeit betrieben werden, um beispielsweise in einem Notzustand eine Orientierung innerhalb des zu beleuchtenden Bereichs zu ermöglichen und dadurch Personen zu erlauben, auf sicherem Wege das Gebäude zu verlassen. Die Notstromversorgung wird in diesem Fall mit Hilfe von Notstromversorgungsmitteln in Form von Batterien oder Akkumulatoren gewährleistet, welche manchmal Gegenstand eines separaten Notbetriebsgerätes sind, idealerweise jedoch Bestandteil des normalen Betriebsgeräts sind bzw. im Falle eines Notzustands das normale Betriebsgerät versorgen. Abhängig vom Betriebszustand (Normalbetrieb oder Notbetrieb) setzt in diesem Fall also dann das Betriebsgerät entweder die externe Versorgungsspannung oder die durch die Notstromversorgungsmittel zur Verfügung gestellt Spannung in eine geeignete Betriebsspannung für die Leuchtmittel um.

Derartige Notstromversorgungsmittel in Form von Batterien oder Akkumulatoren sind hinsichtlich ihrer Leistungsfähigkeit allerdings verhältnismäßig temperatursensibel. So fällt die Leistung von Batterien oder Akkumulatoren bei niedrigen Temperaturen bekanntlicher Weise stark ab. Auch hohe Temperaturen jedoch wirken sich negativ auf die Leistungsfähigkeit der Batterien aus, weshalb u.a. darauf geachtet werden sollte, dass diese nicht einer zu starken thermischen Belastung unterliegen. Da jedoch während des Normalbetriebs die elektronischen Komponenten des Betriebsgeräts, welche für die Umsetzung der externen Versorgungsspannung in die Betriebsspannung verantwortlich sind, zwangsläufig eine gewisse Wärme produzieren, muss darauf geachtet werden, dass diese Komponenten die Leistungsfähigkeit der Notstromversorgungsmittel nicht negativ beeinträchtigen.

Bei bislang bekannten Lösungen der oben beschriebenen Art wurden deshalb oftmals die Notstromversorgungsmittel nochmals als eigenständige Einheit ausgeführt, welche wiederum separat in dem Deckenzwischenraum zwischen Rohdecke und abgehängter Decke angeordnet und dann über eine Kabelverbindung mit dem Betriebsgerät verbunden wird. Es ist offensichtlich, dass diese Lösung zumindest hinsichtlich des Aufwands bei der Montage der Leuchte nicht optimal ist.

Aus der WO 02/16826 A1 ist eine Leuchte mit Batterien für einen Notstrombetrieb und mit einem Transformator bekannt. Die Batterien sind in einem ersten Bereich des Gehäuses der Leuchte angeordnet und der Transformator in einem, vom ersten Bereich getrennten zweiten Bereich.

Ferner beschreibt die WO 2013/136242 A2 ein Betriebsgerät zum Betreiben von Leuchtmitteln, wobei das Betriebsgerät zusätzlich auch für einen Notstrombetrieb genutzte Batterien aufweist, welche in besonderer Weise gelagert werden, um die Leistungsfähigkeit der Batterie nicht negativ zu beeinträchtigen. Das Dokument "Capacity of Power-Batteries versus Temperatur", Jan Leuchter et al. zeigt ferner die Notwendigkeit, Batterien vor eine zu hohen thermischen Belastung zu schützen.

Der vorliegenden Erfindung liegt die Aufgabenstellung zu Grunde, eine neuartige Möglichkeit zum Realisieren eines Betriebsgeräts zum Betreiben von Leuchtmitteln zur Verfügung zu stellen, wobei das Betriebsgerät auch für einen Notbetrieb geeignet ist und gewährleistet ist, dass die hierfür erforderlichen Notstromversorgungsmittel nicht zu stark thermisch belastet werden.

Die Aufgabe wird durch ein Betriebsgerät zum Betreiben von Leuchtmitteln mit den Merkmalen des Anspruchs 1 gelöst. Vorteilhafte Weiterbildungen der Erfindung sind Gegenstand der abhängigen Ansprüche.

Die erfindungsgemäße Lösung beruht auf dem Gedanken, beide Komponenten, also einerseits die elektronischen Komponenten sowie andererseits die Notstromversorgungsmittel in einem Gehäuse zusammenzufassen, allerdings zwischen beiden Komponenten eine thermische Barriere vorzusehen.

Erfindungsgemäß wird also ein Betriebsgerät zum Betreiben von Leuchtmitteln vorgeschlagen, welches Anschlüsse für eine externe Versorgungsspannung sowie Notstromversorgungsmittel zum Bereitstellen einer Notstromversorgung aufweist, wobei die Notstromversorgungsmittel zumindest eine Batterie oder einen Akkumulator umfassen, und wobei ferner elektronische Komponenten vorgesehen sind, welche die externe Versorgungsspannung oder die Notstromversorgung in eine Betriebsspannung für die Leuchtmittel umsetzen. Das Betriebsgerät weist ferner ein Gehäuse zur Aufnahme der Notstromversorgungsmittel sowie der elektronischen Komponenten auf, wobei das Gehäuse einen ersten Bereich zur Aufnahme der elektronischen Komponenten sowie einen zweiten Bereich zur Aufnahme der Notstromversorgungsmittel aufweist und wobei der erste Bereich und der zweite Bereich thermisch voneinander getrennt sind.

Erfindungsgemäß ist ferner vorgesehen, dass beide Bereiche zu einem gemeinsamen Gehäuse zusammengefasst sind, wobei dann das Gehäuse Zwischenwände aufweist, welche den ersten Bereich und den zweiten Bereich voneinander thermisch trennen. Dabei sind mindestens zwei Zwischenwände vorhanden, welche einen den ersten Bereich von dem zweiten Bereich trennenden Zwischenraum einschließen. Der Zwischenraum wird in diesem Fall nicht nur von den Zwischenwänden, sondern auch von Außenwänden des Gehäuses eingeschlossen, wobei diese Außenwände des Gehäuses mindestens eine, vorzugsweise jedoch mehrere Öffnungen aufweisen. Hierdurch wird ermöglicht, dass in dem Zwischenraum sich möglicherweise erwärmende Luft durch Konvektion das Gehäuse verlassen kann und dementsprechend tatsächlich eine optimale thermische Trennung zwischen den beiden Gehäusebereichen erzielt wird.

Selbstverständlich müssen die Notstromversorgungsmittel in irgendeiner Art und Weise elektrisch mit den elektronischen Komponenten verbunden sein. Das heißt, es sind elektrische Leitungen vorgesehen, welche den ersten Bereich mit dem zweiten Bereich verbinden. Hierbei ist gemäß einer besonders bevorzugten Ausführungsform der Erfindung vorgesehen, dass die elektrischen Leitungen durch Leiterbahnen realisiert sind, welche auf einer Leiterplatte ausgebildet sind, die sich von dem ersten Bereich des Gehäuses in den zweiten Bereich erstreckt. Diese Leiterplatte überbrückt dann gegebenenfalls auch den oben angesprochenen Zwischenraum zwischen beiden Bereichen, spielt allerdings für die thermische Kupplung beider Bereiche keine Rolle, so dass die thermische Trennung zwischen den elektronischen Komponenten und den Notstromversorgungsmitteln nach wie vor gewährleistet ist.

Vorzugsweise weist der zweite Bereich einen separaten Deckel auf, über den der Innenraum dieses zweiten Bereichs zugänglich ist. Auf diesem Wege kann ein Einsetzen beziehungsweise ein gegebenenfalls erforderlicher Austausch der Batterien ohne Probleme vorgenommen werden.

Auch der erste Bereich des Gehäuses kann einen Deckel aufweisen, über den der Innenraum des ersten Bereichs dann zugänglich ist. Neben den elektronischen Komponenten können in diesem ersten Bereich dann ferner auch Anschlussklemmen für externe Notstromversorgungsleitungen und/oder für Versorgungsleitungen für die Leuchtmittel angeordnet sein. Das Herstellen der Verbindung zur externen Spannungsversorgung sowie zu der zu versorgenden Leuchte kann also in einfacher Weise vorgenommen werden, so dass insgesamt die Montage des Betriebsgeräts und der zugehörigen Leuchte sehr einfach gehalten wird. Ferner können dann in diesem ersten Bereich auch Zugentlastungsmittel vorgesehen sein.

Eine weitere vorteilhafte Weiterbildung kann ferner auch darin bestehen, dass in dem ersten Bereich befindliche Überwachungsmittel, die z.B. zur Temperaturüberwachung genutzt werden, auch mit entsprechenden Sensormitteln im zweiten Bereich gekoppelt sind und dann ggf. eine entsprechen Auswertung der Sensorinformationen vornehmen. Vorzugsweise wird das Betriebsgerät wie eingangs beschrieben als separate Einheit genutzt, welche dann über eine Kabelverbindung mit der eigentlichen Leuchte gekoppelt ist. In gleicher Weise könnte das Betriebsgerät allerdings auch als Einheit fest an einer Leuchte oder in einer Leuchte positioniert werden.

Nachfolgend soll die Erfindung anhand der beiliegenden Zeichnung näher erläutert werden. Es zeigen:
- Figuren la bislc: Ansichten eines ersten Ausführungsbeispiels eines erfindungsgemäßen Betriebsgeräts;
- Figuren 2a und 2b: Ansichten eines zweiten Ausführungsbeispiels eines erfindungsgemäßen Betriebsgeräts und
- Figuren 3 und 3b: ein drittes erfindungsgemäßes Betriebsgerät.

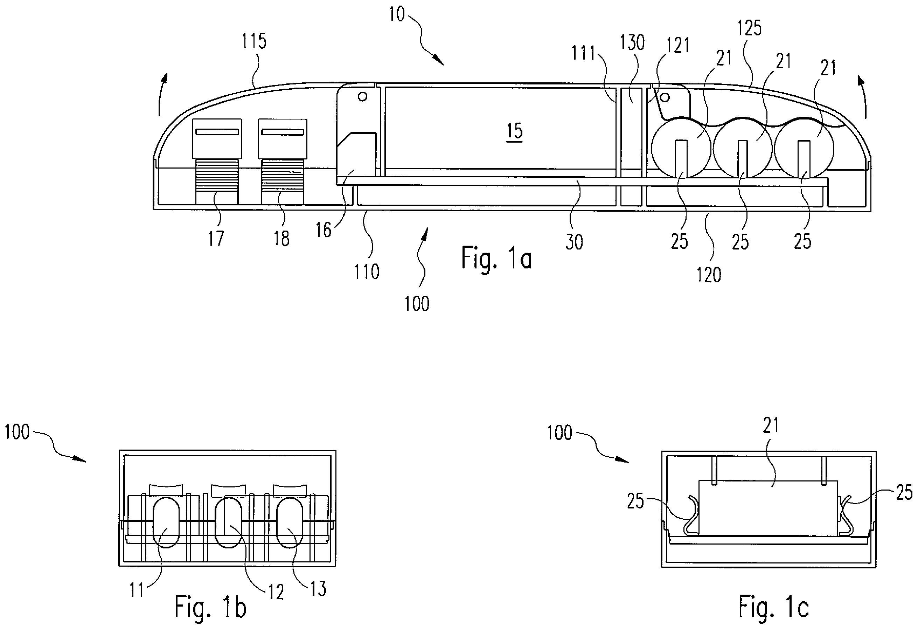

Die Figuren 1a, 1b und 1c zeigen zunächst ein erstes Ausführungsbeispiel eines mit dem Bezugszeichen 1000 versehenen erfindungsgemäßen Betriebsgeräts zum Betreiben von Leuchtmitteln. Es handelt sich wie bereits erwähnt idealerweise um ein Betriebsgerät 100, welches separat von der Leuchte mit den zu betreibenden Leuchtmitteln genutzt wird und mit der Leuchte lediglich über eine nicht näher dargestellte Kabelverbindung lösbar gekoppelt ist. Dies eröffnet die Möglichkeit, das Betriebsgerät 100 als separate Einheit zu nutzen, die auch in sehr beengten Räumen platzsparend und einfach positioniert werden kann. Denkbar wäre insbesondere eine Positionierung in einem Deckenzwischenbereich zwischen einer abgehängten Decke, in der die eigentliche Leuchte in einer entsprechenden Einbauöffnung positioniert wird, und einer Rohdecke eines Raums. Allerdings ist die erfindungsgemäße Lösung nicht zwingend auf derartige Anwendungsfälle beschränkt und das Betriebsgerät 100 könnte auch z.B. innerhalb eines Leuchtengehäuses angeordnet werden.

Die drei Darstellungen zeigen dabei die Außenkontur des Betriebsgeräts 100, wobei jedoch gleichzeitig auch die Anordnung der wesentlichen Komponenten im Inneren erkennbar ist. Grundsätzlich ist jedoch das mit dem Bezugszeichen 10 bezeichnete Gehäuse in Form eines länglichen Quaders ausgeführt, der an seinen beiden Stirnseiten auf der Oberseite abgerundete Endbereiche aufweist. Diese werden durch nachfolgend noch näher beschriebene schwenkbare Klappen oder Deckel 115, 125 realisiert, die wahlweise - wie durch die Pfeile angeordnet - geöffnet werden können, um Zugang zum Innenraum des Gehäuses 10 zu erhalten.

Innerhalb des Gehäuses 10 sind dann zunächst einmal die für den Betrieb der Leuchtmittel verantwortlichen Komponenten angeordnet. Es handelt sich einerseits um lediglich schematisch dargestellte elektronische Betriebsmittel beziehungsweise Komponenten 15, welche für die eigentliche Erzeugung der Betriebsspannung für die Leuchtmittel verantwortlich sind. In einem Normalbetrieb setzen diese elektronischen Komponenten 15, die z.B. in Form eines sogenannten Konverters vorliegen können, eine extern zugeführte allgemeine Versorgungsspannung in eine geeignete Betriebsspannung für die Leuchtmittel um. Die Kopplung an die externe Versorgungsspannung wird dadurch erzielt, dass das vordere Gehäuseende wie in Figur 1b erkennbar Durchführungsöffnungen 11 bis 13 aufweist, durch welche externe Stromversorgungskabel in das Gehäuse 10 hineingeführt werden können. Diese Öffnungen 11 bis 13 dienen allerdings nicht nur dem Zuführen der externen Kabel für die Stromversorgung sondern auch dem Herausführen von Versorgungsleitungen, welche dann zu den Leuchtmitteln beziehungsweise zu der Leuchte mit den zu versorgenden Leuchtmitteln führen. Die oval ausgeführten Öffnungen 11 bis 13 sind dabei derart ausgebildet, dass sie jeweils zum einen durch eine entsprechende Ausnehmung in der Stirnwand des Gehäuses 10 sowie zum anderen durch eine korrespondierende Ausnehmung in dem zugehörigen Gehäusedeckel 115 gebildet werden. Gegebenenfalls können an dem Gehäuse 10 sowie an dem Deckel 115 nicht näher dargestellte Dichtungsmaßnahmen vorgesehen sein, welche gemeinsam mit den hindurchgeführten Kabeln die Öffnungen 11 bis 13 dichtend verschließen, sodass ein gewisser Schutz des Gehäuseinnenraums vor äußeren Einflüssen wie z.B. Staub und/oder Feuchtigkeit gewährleistet ist.

Die Kopplung der elektronischen Komponenten 15 an die durch die Öffnungen 11 bis 13 hindurchgeführten Leitungen erfolgt dann mit Hilfe von Klemmen 16, die am entsprechenden Endbereich der elektronischen Komponenten 15 positioniert sind. Ferner können diesen Klemmen 16 vorgeordnet schematisch dargestellte Zugentlastungsmittel 17 und 18 vorgesehen sei, durch welche die durch die Öffnungen 11 bis 13 hindurchgeführten Leitungen fixiert werden, sodass diese nicht versehentlich aus den Klemmen der 16 herausgezogen werden können.

Wie bereits erwähnt sollen allerdings die elektronischen Komponenten 15 nicht nur während eines Normalbetriebs die extern zugeführte Versorgungsspannung in eine geeignete Betriebsspannung für die Leuchtmittel umsetzen, sondern auch in einem Notzustand noch die Leuchtmittel betreiben, um eine gewisse Grundbeleuchtung zur Verfügung zu stellen. Zur Energieversorgung werden in diesem Fall dann Notstromversorgungsmittel 20 genutzt, welche in einem den Zugentlastungsmitteln 17 beziehungsweise 18 gegenüber liegenden Bereich des Gehäuses 10 positioniert und im vorliegenden Fall durch drei Batterien 21 gebildet sind. Die Batterien 21 sind in diesem Fall mit Hilfe von Federklemmen 25 lösbar in dem entsprechenden Gehäusebereich gehalten, sodass sie nach Öffnen des entsprechenden Gehäusedeckels 125 problemlos ausgetauscht werden können. Eine elektrische Verbindung zu den elektronischen Komponenten 15 wird mit Hilfe einer Leiterplatte 30 erzielt, welche sich von den Batterien 21 bzw. den Federklemmen 25 zu den elektronischen Komponenten 15 hin erstreckt und entsprechende Leiterbahnen aufweist. Es ist in diesem Fall also keine Kabelverbindung zwischen den Batterien 21 und den elektronischen Komponenten 15 vorgesehen sondern stattdessen die Nutzung der beschriebenen Leiterplatte 30 vorgesehen, wodurch der Montageaufwand beim Zusammenbau des Betriebsgeräts 100 weiter reduziert wird.

Das Betriebsgerät 100 beinhaltet also erfindungsgemäß einerseits die elektronischen Komponenten 15 zur Versorgung der Leuchtmittel sowie andererseits die Notstromversorgungsmittel 20, welche durch die Batterien 21 realisiert sind. Diese Batterien 21 sind allerdings wie eingangs beschrieben verhältnismäßig temperatursensibel und sollten insbesondere nicht zu hohen Temperaturen ausgesetzt sein, da diese deren Leistungsfähigkeit, insbesondere ihre Speicherkapazität beeinträchtigen würden. Da andererseits die elektronischen Komponenten 15 während des Normalbetriebs zwangsläufig Wärme erzeugen, ist erfindungsgemäß vorgesehen, das Gehäuse 100 derart auszugestalten, dass die Notstromversorgungsmittel 20 von den elektronischen Komponenten 15 thermisch getrennt sind. Diese Maßnahmen sollen nachfolgend näher beschrieben werden.

So ist zunächst anhand der Längsdarstellung von Figur 1a erkennbar, dass das Gehäuse 100 in zwei Bereiche unterteilt ist, einen - in der Darstellung linken - ersten Bereich 110, in dem insbesondere die elektronischen Komponenten 15 - aber auch die Anschlussklemmen 16 und die Zugentlastungsmittel 17, 18 - angeordnet sind, sowie einen rechten zweiten Bereich 120, der der Aufnahme der Notstromversorgungsmittel 20 dient. Erfindungsgemäß ist vorgesehen, beide Bereiche 110, 120 thermisch voneinander zu trennen, was im dargestellten Ausführungsbeispiel dadurch erzielt wird, dass das Gehäuse 100 in Längsrichtung unterteilende Zwischenwände 111 und 121 vorgesehen sind, welche einen Zwischenraum 130 einschließen, der den ersten Bereich 110 von dem zweiten Bereich 120 trennt. Dieser Zwischenraum 130 ist idealerweise vollständig leer, wobei im vorliegenden Fall jedoch sich die Leiterplatte 30 durch diesen Zwischenraum 130 hindurch erstreckt. Diese besteht jedoch idealerweise aus einem thermisch schlecht leitendem Material, sodass durch sie keine nennenswerte thermische Kopplung zwischen den beiden Bereiche 110 und 120 erfolgt. Stattdessen wirkt der Zwischenraum 130 als thermischer Isolator zwischen beiden Bereichen 110, 120, sodass keine wesentliche Wärmeübertragung von den elektronischen Komponenten 15 auf die Notstromversorgungsmittel 20 zu befürchten ist.

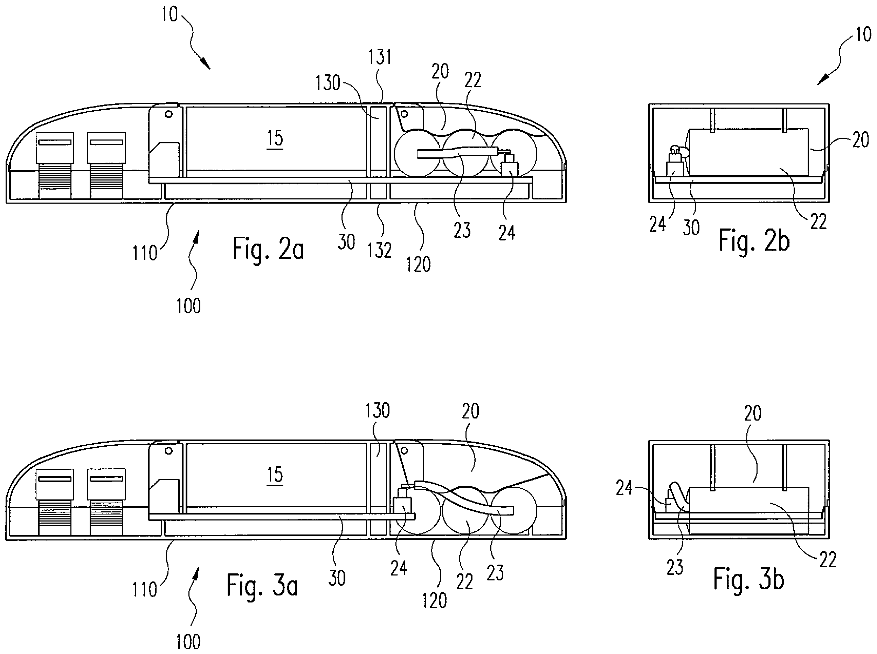

Dabei kann ferner vorgesehen sein, dass diesen Zwischenraum 130 umschließende Außenwände des Gehäuses, also beispielsweise die Oberseite 131 des Gehäuses 10 oder die entsprechende Unterseite 132 (siehe Figur 2a), welche an den Zwischenraum 130 angrenzen, mit Öffnungen versehen sind, sodass eine Luftzirkulation durch den Bereich 130 hindurch ermöglicht wird. Dies führt zusätzlich zu einer verbesserten thermischen Entkopplung zwischen dem ersten Bereich 110 und zweiten Bereich 120, da sich gegebenenfalls erwärmende Luft das Gehäuse 100 verlassen kann und durch kühlere Umgebungsluft ersetzt wird.

Letztendlich führen also die beschriebenen Maßnahmen dazu, dass zwar alle wesentlichen Komponenten, die für einen Normalbetrieb sowie für einen Notbetrieb erforderlich sind, in ein gemeinsames Gehäuse eines Betriebsgeräts integriert werden können, trotz allem jedoch sicher gestellt werden kann, dass die Notstromversorgungsmittel keiner zu hohen thermischen Belastung ausgesetzt sind.

Das Integrieren der Notstromversorgungsmittel 20 in das Betriebsgerät 100 bringt dabei nicht nur den Vorteil mit sich, dass eine einfachere Montage der verschiedenen Leuchtenkomponenten erzielt werden kann. Eine sinnvoll Weiterbildung besteht nämlich darin, auf Grund der nunmehr vorliegenden räumlichen Zusammenfassung der verschiedenen Komponenten Sensoren, die von den elektronischen Komponenten 15 genutzt werden, in synergistischer Weise auch zur Überwachung der Notstromversorgungsmittel 20 einzusetzen. So wäre es beispielsweise denkbar, einen Temperatursensor, der die Temperatur der elektronischen Komponenten 15 überwacht, in einfacher Weise mit einem auf der Leiterplatte 30 in der Nähe der Batterien 21 positionierten temperaturabhängigen Widerstand zu koppeln, über den dann eine Überwachung der Temperatur der Notstromversorgungsmittel 20 vorgenommen wird. Die Anzahl der Bauteile zur Überwachung der verschiedenen Komponenten des Betriebsgeräts 10 kann hierdurch insgesamt reduziert werden.

Ein zweites Ausführungsbeispiel eines erfindungsgemäßen Betriebsgeräts 10 ist in den Figuren 2a und 2b dargestellt, wobei gleiche Komponenten mit gleichen Bezugszeichen versehen sind. Im Vergleich zu der Variante der Figuren la bis 1c unterscheidet sich diese zweite Ausführungsform insbesondere in der Ausgestaltung des Bereichs zur Aufnahme der Notstromversorgungsmittel 20. Hierbei ist nunmehr eine etwas andere Lagerung der Batterien 21 vorgesehen, wobei diese nun nicht mehr als Einzelbatterien in dem Bereich 120 gelagert sind sondern stattdessen ein drei Batterien umfassendes Batteriepack 22 genutzt wird, welches dann über ein Verbindungskabel 23 mit einem Anschlussblock 24 gekoppelt ist. Dieser Anschlussblock 24 ist wiederum auf der bereits erwähnten Leiterplatte 30 positioniert, sodass dann die weitere elektrische Verbindung mit den elektronischen Komponenten 15 in der bereits zuvor erläuterten Weise, also über auf der Leiterplatte 30 vorgesehenen Leiterbahnen erfolgt.

Wiederum ist jedoch der Zwischenraum 130 vorgesehen, der den ersten Bereich 110 mit den dem Konverter bzw. den elektronischen Komponenten 15 thermisch von dem zweiten Bereich 120 mit den Notstromversorgungsmitteln 20 trennt.

Eine dritte Variante eines erfindungsgemäßen Betriebsgeräts 100 ist in den Figuren 3a und 3b dargestellt. Hier kommt wiederum ein Batteriepack 22 zum Einsatz, welches allerdings nunmehr im Vergleich zu den Figuren 2a und 2b in leicht abweichender Weise in dem zweiten Gehäusebereich 120 positioniert wird. In diesem Fall ist nämlich die Leiterplatte 30 etwas kürzer bemessen und erstreckt sich nur in den vorderen Endbereich des zweiten Bereichs 120. Dadurch kann der Boden des entsprechenden Gehäusebereichs 120 als Auflagefläche für das Batteriepack 22 genutzt werden, welches dann wiederum in der zuvor beschriebenen Weise über eine Verbindungsleitung 23 mit einem Anschlussblock 24 verbunden ist, der wiederum auf der Leiterplatte 30 gelagert ist. Auch bei diesem dritten Ausführungsbeispiel sind beide Gehäusebereiche 110 beziehungsweise 120 durch den Zwischenraum 130 thermisch voneinander getrennt, sodass die während des Betriebs auftretende Wärme der elektronischen Komponenten 15 nicht auf die Notstromversorgungsmittel 20 übertragen wird.

Eine nicht dargestellte alternative Lösung könnte ferner darin bestehen, dass beide Bereiche 110 und 120 als voneinander getrennte, separate Gehäuse ausgebildet sind. Allerdings sind diese Gehäuse dann nicht über eine lose Kabelverbindung sondern stattdessen starr miteinander verbunden, sodass sie wiederum eine einfach zu handhabende Einheit bilden, welche beispielsweise in einem Arbeitsschritt in einem Deckenzwischenraum positioniert werden kann.

Letztendlich wird also mit Hilfe der erfindungsgemäßen Lösung ein kompaktes Betriebsgerät zum Betreiben von Leuchtmitteln geschaffen, welches alle Komponenten beinhaltet, die für einen Normalbetrieb sowie für einen Notbetrieb der Leuchtmittel erforderlich sind. Gleichzeitig ist jedoch sichergestellt, dass die thermische Belastung der Notstromversorgungsmittel gering gehalten wird, sodass diese ihre volle Leistungsfähigkeit erzielen können.

## Patentansprüche

1. Betriebsgerät (100) zum Betreiben von Leuchtmitteln, aufweisend
• Anschlüsse für eine externe Versorgungsspannung,
• Notstromversorgungsmittel (20) zum Bereitstellen einer Notstromversorgung, wobei die Notstromversorgungsmittel (20) zumindest eine Batterie (21) oder einen Akkumulator umfassen,
• elektronische Komponenten (15), welche die externe Versorgungsspannung oder die Notstromversorgung in eine Betriebsspannung für die Leuchtmittel umsetzen,
• ein Gehäuse (10) zur Aufnahme der Notstromversorgungsmittel (20) sowie der elektronischen Komponenten (15),
wobei das Gehäuse (10) einen ersten Bereich (110) zur Aufnahme der elektronischen Komponenten (15) sowie einen zweiten Bereich (120) zur Aufnahme der Notstromversorgungsmittel (20) aufweist und
wobei der erste Bereich (110) und der zweite Bereich (120) thermisch voneinander getrennt sind,
und wobei das Gehäuse (10) Zwischenwände (111, 121) aufweist, welche den ersten Bereich (110) und den zweiten Bereich (120) voneinander trennen,
**dadurch gekennzeichnet,**
**dass** mindestens zwei Zwischenwände (111, 121) vorhanden sind, welche einen den ersten Bereich (110) von dem zweiten Bereich (120) trennenden Zwischenraum (130) einschließen,
und **dass** den Zwischenraum (130) umschließende Außenwände (131,132) des Gehäuses (10), welche an den Zwischenraum angrenzen, mit Öffnungen versehen sind, so dass eine Luftzirkulation durch den Zwischenraum (130) hindurch ermöglicht wird.

2. Betriebsgerät nach einem der vorherigen Ansprüche,
**dadurch gekennzeichnet,**
**dass** elektrische Leitungen vorgesehen sind, welche den ersten Bereich (110) mit dem zweiten Bereich (120) verbinden.

3. Betriebsgerät nach Anspruch 2,
**dadurch gekennzeichnet,**
**dass** die elektrischen Leitungen durch Leiterbahnen realisiert sind, welche auf einer Leiterplatte (30) ausgebildet sind, die sich von dem ersten Bereich (110) des Gehäuses (10) in den zweiten Bereich (120) erstreckt.

4. Betriebsgerät nach einem der vorherigen Ansprüche,
**dadurch gekennzeichnet,**
**dass** der zweite Bereich (120) einen Deckel (125) aufweist, über den der Innenraum des zweiten Bereichs (120) zugänglich ist.

5. Betriebsgerät nach einem der vorherigen Ansprüche,
**dadurch gekennzeichnet,**
**dass** der erste Bereich (110) einen Deckel (115) aufweist, über den der Innenraum des ersten Bereichs (110) zugänglich ist.

6. Betriebsgerät nach Anspruch 5,
**dadurch gekennzeichnet,**
**dass** im ersten Bereich (110) ferner Anschlussklemmen (16) für externe Stromversorgungsleitungen und/oder für Versorgungsleitungen für die Leuchtmittel angeordnet sind.

7. Betriebsgerät nach Anspruch 6,
**dadurch gekennzeichnet,**
**dass** im ersten Bereich (110) Zugentlastungsmittel (17, 18) angeordnet sind.

8. Betriebsgerät nach Anspruch 6 oder 7.
**dadurch gekennzeichnet,**
**dass** die Wand des ersten Bereichs (110) Durchführungsöffnungen (11, 12, 13) für Leitungen aufweist.

9. Betriebsgerät nach einem der vorherigen Ansprüche,
**dadurch gekennzeichnet,**
**dass** im ersten Bereich (10) den elektronischen Komponenten (15) zugeordnete Überwachungsmittel, insbesondere zur Temperaturüberwachung vorgesehen sind.

10. Betriebsgerät nach Anspruch 9,
**dadurch gekennzeichnet,**
**dass** die Überwachungsmittel mit in dem zweiten Bereich (120) vorgesehenen Sensormitteln gekoppelt sind.

## Claims

1. An operating device (100) for operating lighting means, having
• connections for an external supply voltage,
• emergency power supply means (20) for providing an emergency power supply, wherein the emergency power supply means (20) comprise at least one battery (21) or an accumulator,
• electronic components (15), which convert the external supply voltage or the emergency power supply into an operating voltage for the lighting means,
• a housing (10) for accommodating the emergency power supply means (20) and the electronic components (15),
wherein the housing (10) has a first region (110) for the accommodation of the electronic components (15) and a second region (120) for the accommodation of the emergency power supply means (20) and
wherein the first region (110) and the second region (120) are thermally separated from one another,
and wherein the housing (10) has intermediate walls (111, 121), which separate the first region (110) and the second region (120) from one another,
**characterized in**
**that** at least two intermediate walls (111, 121) are present, which enclose an intermediate room (130) separating the first region (110) from the second region (120),
and **that** the outer walls (131, 132) of the housing (10) enclosing the intermediate space (130), which walls abut against the intermediate space, are provided with openings, so that an air circulation through the intermediate space (130) is made possible.

2. The operating device according to any of the preceding claims,
**characterized in**
**that** electric lines are provided, which connect the first region (110) to the second region (120).

3. The operating device according to Claim 2,
**characterized in**
**that** the electric lines are realized by conductor paths, which are formed on a printed circuit board (30), which extends from the first region (110) of the housing (10) into the second region (120).

4. The operating device according to any one of the preceding claims,
**characterized in**
**that** the second region (120) has a lid (125), by means of which the interior of the second region (120) can be accessed.

5. The operating device according to any one of the preceding claims,
**characterized in**
**that** the first region (110) has a lid (115), by means of which the interior of the first region (110) can be accessed.

6. The operating device according to Claim 5,
**characterized in**
**that** in the first region (110) connecting terminals (16) for external power supply lines and/or for supply lines for the lighting means are also arranged.

7. The operating device according to Claim 6,
**characterized in**
**that** in the first region (110) strain-relief means (17, 18) are arranged.

8. The operating device according to Claim 6 or 7,
**characterized in**
**that** the wall of the first region (110) has feed-through openings (11, 12, 13) for lines.

9. The operating device according to any one of the preceding claims,
**characterized in**
**that** monitoring means assigned to the electronic components (15), in particular, for temperature monitoring, are provided in the first region (10).

10. The operating device according to Claim 9,
**characterized in**
**that** the monitoring means are coupled with sensor means provided in the second region (120).

## Revendications

1. Appareil de commande (100) pour la commande de moyens d'éclairage, comprenant
• des raccords pour une tension d'alimentation externe,
• des moyens d'alimentation de secours (20) pour la mise à disposition d'une alimentation de secours, les moyens d'alimentation de secours (20) comprenant au moins une batterie (21) ou un accumulateur,
• des composants électroniques (15), qui convertissent la tension d'alimentation externe ou l'alimentation de secours en une tension de service pour les moyens d'éclairage,
• un boîtier (10) pour le logement des moyens d'alimentation de secours (20) ainsi que des composants électroniques (15),
le boîtier (10) comprenant une première partie (110) pour le logement des composants électroniques (15) ainsi qu'une deuxième partie (120) pour le logement des moyens d'alimentation de secours (20) et
la première partie (110) et la deuxième partie (120) étant thermiquement isolées l'une de l'autre,
et le boîtier (10) comprenant des parois intermédiaires (111, 121) qui séparent la première partie (110) de la deuxième partie (120),
**caractérisé en ce que**
au moins deux parois intermédiaires (111, 121) sont prévues, qui forment un espace intermédiaire (130) séparant la première partie (110) de la deuxième partie (120),
et **en ce que** des parois extérieures (131, 132) du boîtier (10) enveloppant l'espace intermédiaire (130), qui sont adjacentes à l'espace intermédiaire, sont munies d'ouvertures, de façon à permettre une circulation de l'air à travers l'espace intermédiaire (130).

2. Appareil de commande selon l'une des revendications précédentes,
**caractérisé en ce que**
des conduites électriques sont prévues qui relient la première partie (110) avec la deuxième partie (120).

3. Appareil de commande selon la revendication 2,
**caractérisé en ce que**
les conduites électriques sont réalisées à l'aide de pistes conductrices qui sont réalisés sur une carte de circuit imprimé (30) qui s'étend de la première partie (110) du boîtier (10) vers la deuxième partie (120).

4. Appareil de commande selon l'une des revendications précédentes,
**caractérisé en ce que**
la deuxième partie (120) comprend un couvercle (125) par l'intermédiaire duquel l'intérieur de la deuxième partie (120) est accessible.

5. Appareil de commande selon l'une des revendications précédentes,
**caractérisé en ce que**
la première partie (110) comprend un couvercle (115) par l'intermédiaire duquel l'intérieur de la première partie (110) est accessible.

6. Appareil de commande selon la revendication 5,
**caractérisé en ce que**
dans la première partie (110) sont disposés en outre des bornes de raccordement (16) pour des conduites d'alimentation électrique externes et/ou pour des conduites d'alimentation pour les moyens d'éclairage.

7. Appareil de commande selon la revendication 6,
**caractérisé en ce que**
dans la première partie (110) sont disposés des moyens de décharge de traction (17, 18).

8. Appareil de commande selon la revendication 6 ou 7,
**caractérisé en ce que**
la paroi de la première partie (110) comprend des ouvertures de passage (11, 12, 13) pour des conduites.

9. Appareil de commande selon l'une des revendications précédentes,
**caractérisé en ce que**
dans la première partie (10) sont prévus des moyens de surveillance correspondant aux composants électroniques (15), plus particulièrement pour la surveillance de la température.

10. Appareil de commande selon la revendication 9,
**caractérisé en ce que**
les moyens de surveillance sont couplés avec des moyens de capteurs prévus dans la deuxième partie (120).
